# DEMANDE DE BREVET EUROPEEN

(11) **EP 4 203 233 A1**
(43) Date de publication de la demande: **28.06.2023**
(21) Numéro de dépôt: 22215262.1
(22) Date de dépôt: 21.12.2022
(51) Int. Cl.: H02J 7/00, H01M 10/60

(54) **PROCÉDÉ DE PRECHAUFFAGE D'UN DISPOSITIF A BATTERIES COMMUTEES**

(30) Priorité: 23.12.2021 FR 2114455
(71) Demandeur: COMMISSARIAT A L'ENERGIE ATOMIQUE ET AUX ENERGIES ALTERNATIVES, 75015 Paris (FR)
(72) Inventeur: DESPESSE, Ghislain, 38054 GRENOBLE CEDEX 09 (FR); BACQUET, Sylvain, 38054 GRENOBLE CEDEX 09 (FR); CASSARINO, Leandro, 38054 GRENOBLE CEDEX 09 (FR); FERNANDEZ, Eric, 38054 GRENOBLE CEDEX 09 (FR); LOPEZ, Yan, 38054 GRENOBLE CEDEX 09 (FR); THOMAS, Remy, 38054 GRENOBLE CEDEX 09 (FR)
(74) Mandataire: Brevalex

(57) **Abrégé**

L'invention concerne un dispositif de type pack de batterie comportant une première borne (101), une deuxième borne (102) et une pluralité d'éléments de stockage d'énergie entre ces bornes, chaque élément comportant:
a) des moyens de commutation pour le connecter avec, ou pour le déconnecter de, un ou plusieurs autres éléments;
b) des moyens conducteurs (15, 17) pour conduire un courant, parallèlement à l'élément, lorsque celui-ci n'est pas connecté avec un ou plusieurs autres éléments;
le dispositif comportant en outre :
c) des moyens (20) pour établir un court-circuit entre les bornes (101, 102) de la batterie lorsque celle-ci est déconnectée ou fournit une tension nulle ;
d) des moyens (30) de contrôle, spécifiquement adaptés pour :
- sélectionner au moins un premier élément de stockage d'énergie et au moins un deuxième élément de stockage d'énergie, au moins un de ces éléments étant à réchauffer, pour faire circuler un courant au moins du premier élément vers le deuxième élément lorsque les bornes (101, 102) sont court-circuitées ;
- arrêter le courant lorsqu'une température de consigne pour un ou plusieurs éléments du pack est atteinte.

## Description

### DOMAINE TECHNIQUE ET ÉTAT DE LA TECHNIQUE ANTÉRIEURE

L'invention concerne le domaine des dispositifs à batteries commutées. Elle concerne plus particulièrement un dispositif et un procédé qui permet de réaliser un chauffage d'un ou plusieurs éléments d'un dispositif à batteries commutées, en particulier lorsque la sortie de celui-ci est court-circuitée.

On connaît une architecture d'un dispositif à batteries ou à cellules commutées, par exemple par les documents suivants : FR2972305 et FR3007210. D'autres documents tels que FR2972307, FR2977986, FR2951320, FR2944161 décrivent également des architectures d'un dispositif à batteries ou à cellules commutées.

Dans les documents FR2972305 et FR3007210, le courant de sortie/d'échange est directement lié au courant de sortie Iₒᵤₜ du pack qui alimente l'application ou qui vient d'un chargeur. Ce courant est contrôlé pour satisfaire les besoins de l'application et non optimisé pour le chauffage des éléments, même si l'on peut privilégier l'utilisation d'un élément plutôt qu'un autre pour chauffer en priorité un élément par rapport à un autre ; mais, dans le même temps, on décharge plus fortement cet élément par rapport aux autres. En outre, à l'arrêt du système, il est impossible de faire un préchauffage de pack batterie faute d'un courant Iₒᵤₜ échangé avec l'extérieur.

Autrement dit, en cas de courant nul en sortie, les documents connus, cité ci-dessus, ne proposent pas de solution permettant de réaliser un chauffage de certains éléments du pack batterie.

Un problème qui se pose est donc de pouvoir effectuer un chauffage des différents éléments d'une architecture d'un « pack » batterie, de type commuté, lorsque celui-ci est déconnecté de la charge ou fournit une tension nulle.

### EXPOSÉ DE L'INVENTION

L'objectif de l'invention est de pouvoir effectuer un chauffage d'un ou plusieurs éléments d'un pack batterie quand celui-ci est déconnecté de la charge ou lui fournit une tension nulle.

L'invention propose un mécanisme permettant à un dispositif à batteries commutées de chauffer un ou plusieurs élément(s) ou une ou plusieurs cellule(s) même quand le système est déconnecté de la charge ou encore s'il fournit une tension nulle en sortie.

À cette fin, l'invention concerne un dispositif de type pack de batterie comportant une première borne, une deuxième borne et une pluralité d'éléments de stockage d'énergie entre ladite première borne et ladite deuxième borne, chaque élément pouvant comporter:
a) - une pluralité de cellules de stockage d'énergie en série, chacune associée avec des moyens de commutation pour la connecter, par exemple en série, avec au moins un autre élément, ou pour le déconnecter d'un ou plusieurs autres éléments;
b) des moyens conducteurs pour conduire un courant, dit courant principal, parallèlement à l'élément, ou par un circuit ou chemin (comportant au moins un conducteur) parallèle à l'élément, dit circuit ou chemin de « by-pass », lorsque cet élément est déconnecté ou n'est pas connecté avec un ou plusieurs autres éléments;
de préférence, le dispositif comporte:
c) - des moyens pour établir un court-circuit entre une première borne et une deuxième borne de la batterie lorsque celle-ci est déconnectée ou fournit une tension nulle ;
d) des moyens de contrôle, spécifiquement adaptés pour sélectionner au moins un premier élément de stockage d'énergie, par exemple dans un premier état de charge et au moins un deuxième élément de stockage d'énergie, par exemple dans un deuxième état de charge, au moins un de ces deux éléments étant à réchauffer et pour faire circuler un courant du premier élément vers le deuxième élément lorsque la première borne et la deuxième borne du dispositif sont court-circuitées.

Dans la présente demande un élément en « by pass » est un élément déconnecté mais avec des moyens, formant par exemple un circuit (pouvant comporter un ou plusieurs éléments conducteurs, par exemple un transistor) ou chemin parallèle ou alternatif, permettant la circulation d'un courant, dit courant principal, dans la batterie ; le courant passe alors par ces moyens, par exemple par ce chemin parallèle ou alternatif à celui de l'élément, par exemple par une ou plusieurs cellule(s) parallèle(s) qui est restée connectée ou encore par un ou plusieurs éléments conducteurs resté(s) connecté(s) ou chemin de passage dudit courant; ce circuit ou chemin parallèle est parcouru par le courant via la fermeture d'un moyen formant interrupteur alors qu'un interrupteur série (ou les moyens de commutation pour connecter l'élément en série avec au moins un autre élément) de l'élément est ouvert ; un chemin de « by-pass » d'un élément peut donc être une portion de circuit ou un chemin alternatif pour le courant de la batterie ou du pack.

De préférence on ouvre les moyens de commutation (par exemple un interrupteur) associés à l'élément, par exemple en série avec celui-ci, avant que le chemin parallèle soit fermé, par exemple par des moyens de commutation (par exemple un interrupteur), ce qui évite tout risque de court-circuit sur l'élément ; pour cela on peut ménager un temps mort entre l'ouverture des moyens de commutation associés de l'interrupteur et la fermeture du chemin parallèle.

Les moyens de contrôle peuvent en outre être spécifiquement adaptés pour arrêter le courant lorsque au moins une température de consigne pour au moins une ou plusieurs cellules du pack, par exemple au moins une des 2 cellules ci-dessus et/ou pour une partie du pack de batterie et/ou pour le pack de batterie est atteinte et/ou lorsque au moins 2 cellules ont sensiblement une même température ou une température voisine. Par voisine, ou sensiblement une même température, ou une même température, on entend un écart de température inférieur à 10°C, avantageusement inférieur à 5°C.

L'invention concerne également un procédé de chauffage ou d'équilibrage de la température d'un dispositif de type pack de batterie du type décrit ci-dessus.

L'invention concerne également un procédé de chauffage ou d'équilibrage de la température dans un dispositif de type pack de batterie, par exemple tel que décrit ci-dessus dans le cadre de la présente invention, comportant une première borne, une deuxième borne et une pluralité de cellules de stockage d'énergie, par exemple en série, entre ladite première borne et ladite deuxième borne, chacun associé avec des moyens de commutation pour le connecter ou le déconnecter d'un ou plusieurs autre(s) élément(s), ce procédé comportant :
a) - l'établissement d'un court-circuit entre une première borne et une deuxième borne de la batterie lorsque celle-ci est déconnectée ou fournit une tension nulle ;
b) - la sélection d'au moins un premier élément de stockage d'énergie, par exemple dans un premier état de charge, et d'au moins un deuxième élément de stockage d'énergie, par exemple dans un deuxième état de charge, au moins un de ces deux éléments étant à réchauffer ;
c) la circulation d'un courant du premier élément vers le deuxième élément.

La circulation de ce courant peut être arrêtée lorsqu'au moins une température de consigne pour au moins un ou plusieurs éléments du pack, par exemple au moins un des 2 éléments ci-dessus et/ou pour au moins une partie du pack de batterie et/ou pour au moins le pack de batterie est atteinte et/ou lorsque au moins 2 éléments ont une même température ou une température voisine.

Selon l'invention, on peut refermer le circuit électrique (par court-circuit en sortie du pack de batterie) et faire passer du courant à travers le pack de batterie, lequel pourra alors circuler dans un ou plusieurs éléments et ainsi les chauffer.

Il est donc possible d'échanger du courant entre les éléments du pack de batterie pour réchauffer un ou plusieurs de ces éléments.

La sortie du pack étant en court-circuit, le courant d'échange est contrôlé par la batterie elle-même via une boucle de régulation du courant qui passe dans le court-circuit de la sortie, ce qui présente les avantages suivants :
- indépendance par rapport au cas d'un courant de sortie qui évolue au fil des besoins de l'utilisateur ;
- il est possible de préchauffer la batterie, avant le démarrage du système, c'est-à-dire sans avoir besoin d'un courant de recharge ou d'un courant consommé sur des équipements connectés en sortie du pack batterie.

Il est possible de réaliser des va-et-vient de courant entre les cellules ou les éléments, ce qui, en moyenne, ne modifie pas significativement leur état de charge : par exemple, un élément donne des charges qu'il récupère ensuite, de préférence à une fréquence suffisamment élevée (par exemple une fréquence > 0.01Hz) de sorte que l'état de charge que chaque élément n'oscille pas significativement. Mais ce courant de va-et-vient crée des pertes ohmiques dans les briques, ce qui les réchauffe. Dans un procédé selon l'invention, la circulation d'un courant entre le premier élément et le deuxième élément peut comporter un va-et-vient de courant entre ces 2 éléments, le courant échangé entre ces 2 éléments étant en moyenne nul.

Le courant, par exemple le courant efficace moyen, de chaque élément peut être régulé de manière à contrôler la température du ou des éléments concernés. Le courant efficace correspond à la racine carrée de la moyenne du courant au carré. Pour un courant sinusoïdal, la valeur efficace vaut l'amplitude crête divisé par racine de 2 et le courant moyen est nul (c'est-à-dire que la puissance moyenne échangée est nulle); on peut utiliser des courant de différentes formes, tel qu'expliqué plus loin dans la présente demande. Ce courant peut présenter une composante continue pour assurer dans le même temps une fonction d'échange de puissance (pour un réajustement, par exemple de l'équilibrage, de la disponibilité, du rendement ou autres).

Selon la présente invention on crée volontairement des déséquilibres de charge, par une circulation des charges entre les éléments du pack, puis on peut résoudre ces déséquilibres, par une circulation des charges en sens inverse, afin de réchauffer les éléments ou les cellules. De préférence, les déséquilibres de charge que l'on crée sont de courte durée et dans un sens puis dans l'autre, afin de réchauffer un ou plusieurs éléments.

L'invention permet d'éviter la mise en oeuvre un dispositif de chauffage, par exemple électrique, externe au pack de batterie (par exemple par un dispositif de chauffage électrique). De plus, elle permet d'apporter de la chaleur au coeur même des cellules de la batterie (là où elle est utile), et minimise les déperditions périphériques.

Les étapes a) - c) peuvent être mises en oeuvre par des moyens de contrôle du pack de batterie.

Un dispositif selon l'invention peut comporter des moyens permettant d'inverser la tension d'au moins un élément ou groupe d'éléments (par exemple d'un module) ; un procédé selon l'invention peut comporter une étape d'inversion de la tension d'au moins un élément ou groupe d'éléments (par exemple d'un module). Ceci permet de diriger un courant de l'élément ou du groupe d'élément(s), dont on a inversé la tension, vers un autre élément ou groupe d'élément(s).

Dans un dispositif ou un procédé selon l'invention, chaque élément peut comporter une ou plusieurs cellules électrochimiques et/ou une ou plusieurs capacité(s) et/ou une ou plusieurs super capacité(s) et/ou une ou plusieurs cellule(s) de stockage.

Un élément d'un dispositif ou dans un procédé selon l'invention peut comporter :
- un ensemble quelconque de cellules électrochimiques élémentaires connectées en série et/ou parallèle, que l'on appelle parfois « module » ;
- et/ou une cellule comportant un élément générateur (Photovoltaïque par exemple, ou pile à Combustible) associé par exemple à un ou plusieurs élément(s) de stockage(s) (de type électrochimique ou capacité).

Les moyens de contrôle peuvent être spécialement adaptés, et/ou un procédé selon l'invention comporte une étape, pour calculer au moins la valeur et/ou le profil d'un courant de chauffage (I_{out_set_eff}) en fonction :
- d'une température d'un ou plusieurs éléments et/ou d'une température externe (T°ₑₓₜ) et/ou d'un état de la batterie, par exemple un état de charge (SoC) et/ou de santé (SoH);
- et/ou de la capacité des éléments de la batterie à accepter un courant ;
- et/ou d'une durée estimée avant que la batterie soit utilisée.

Les moyens de contrôle peuvent être en outre spécialement adaptés pour calculer un, et/ou un procédé selon l'invention peut comporter une étape de calcul d'un, courant de chauffage (I_{out_set_eff}) en fonction d'une forme d'onde du courant.

Selon une réalisation, le courant a :
- une forme continue ou est constant;
- ou une forme d'onde périodique, par exemple sinusoïdale, ou en carré, ou en triangle, à laquelle est superposée une éventuelle composante continue, permettant par exemple de réaliser un réajustement, par exemple un équilibrage, de l'état de charge entre les cellules ou les éléments ; l'équilibrage d'état de charge est un cas particulier du réajustement ; on peut chercher à modifier les états de charge relatifs sans forcément chercher un équilibre mais par exemple la disponibilité.

Selon une autre réalisation:
- le courant a une forme continue ou est constant;
- les tensions fournies au moins par la première cellule de stockage d'énergie et au moins par la deuxième cellule de stockage d'énergie, étant alternatives, et incluant éventuellement une composante continue.

Dans un procédé ou un dispositif selon l'invention, le courant peut avoir une forme optimisée pour maximiser l'échauffement ; par exemple, il a une fréquence pour laquelle la composante réelle d'une impédance d'au moins une cellule est maximale.

Les moyens de contrôle peuvent être en outre spécialement adaptés pour, et/ou un procédé selon l'invention comporte une étape pour :
- effectuer une répartition des éléments à réchauffer en deux groupes d'éléments G1 et G2;
- faire circuler le courant du groupe G1 d'éléments au groupe G2, puis éventuellement du groupe G2 d'éléments au groupe G1.

Les moyens de contrôle peuvent être en outre spécialement adaptés pour, et/ou un procédé selon l'invention comporte une étape pour, maximiser le nombre d'éléments mis en jeu dans les groupes G1 et G2 et/ou pour maximiser |UG₁|+|UG₂|, U_{G1} (resp. U_{G2}) étant la tension fournie par le groupe G1 (resp.G2). Un dispositif selon l'invention peut comporter une boucle de régulation du courant. Dans un procédé selon l'invention, le courant peut être régulé à l'aide d'une boucle de régulation.

Par exemple, ladite boucle de régulation du courant détermine un nombre (NG1) de premières cellules de stockage d'énergie et un nombre (NG2) de deuxièmes cellules de stockage d'énergie, ainsi que la tension (VG1) fournie par l'ensemble des premières cellules de stockage d'énergie et la tension (VG2) fournie par l'ensemble des deuxièmes cellules de stockage d'énergie.

Les stratégies suivantes peuvent être mises en oeuvre à l'aide d'un dispositif ou d'un procédé selon l'invention :
- différents éléments ou parties du pack de batterie peuvent être chauffé(e)s à des températures différentes ;
- ou différents éléments ou parties du pack de batterie peuvent être chauffé(e)s pour les faire converger vers une température commune, par exemple la température de l'élément ou de la partie du pack la plus chaude ;
- ou un procédé selon l'invention ou un chauffage d'un dispositif selon l'invention peut être précédé d'un refroidissement de différents éléments ou parties du pack de batterie pour les faire converger vers une température commune.

L'invention peut s'appliquer à tous les systèmes de stockage basés sur une architecture commutée, c'est-à-dire une batterie ou un ensemble de batteries, composé(e) de cellules ou d'éléments, par exemples de modules, pouvant être mis en série, ou mis en parallèle, ou remplacé par un court-circuit ou mis en série avec une possible inversion de polarité. Un « élément » peut être une cellule élémentaire, par exemple électrochimique, ou un groupe de telles cellules élémentaires, connectées en série et/ou parallèle. D'une manière générale, l'invention s'applique aussi aux cas où les éléments sont associés à des convertisseurs DC/DC.

L'invention peut s'appliquer à des batteries comportant plusieurs accumulateurs relevant de technologies différentes (par exemple différentes chimies de batterie, des capacités, des super-capacités...) et/ou de différentes technologies de générateurs (pile à combustible, panneaux solaires...).

Dans la présente demande, une référence à une ou des cellule(s) commutée(s) doit se comprendre comme couvrant également une combinaison de plusieurs cellules électrochimiques, et/ou plusieurs capacités, et/ou plusieurs piles à combustible, et/ou plusieurs source/générateur d'énergie....

Une combinaison de plusieurs cellules pouvant être connectées en série et/ou en parallèle est aussi appelée « module ».

D'une manière générale, dans la présente demande, l'état de santé peut être défini par la dégradation de la quantité de charge qu'une cellule (ou plus généralement un élément) peut stocker/délivrer, par rapport à son état d'origine (avant toute utilisation), à isocourant. Un SOH de 100% vaut pour une absence de dégradation, un SOH de 0% signifie que la cellule ne peut plus stoker d'énergie. On peut aussi définir l'état de santé par le rapport de capacité en Ah entre la capacité de la cellule (ou plus généralement un élément) à un instant t et sa capacité quand elle était neuve. La capacité d'une cellule est le nombre d'Ampère-heure (Ah) (l'Ah est une unité homogène au Coulomb) que la cellule peut délivrer suite à une charge complète. Les Ampères-heures correspondent à une intégration du courant, pour la capacité il s'agit d'intégrer le courant entre le début et la fin de la décharge. On peut également trouver une définition du SoH sur le lien suivant : https://www.labellebatterie.com/soh-batterie-et-capacite-ce-quil-faut-comprendre/

### BRÈVE DESCRIPTION DES DESSINS

Des exemples de réalisation de l'invention seront maintenant décrits en référence aux dessins annexés dans lesquels :
[Fig. 1] représente une réalisation d'un pack de batterie selon l'invention, mettant en oeuvre une architecture à cellules commutées, muni de moyens pour court-circuiter sa sortie ;
[Fig. 2] représente schématiquement une réalisation des moyens de commande mise en oeuvre dans le cadre d'un pack de batterie selon l'invention ;
[Fig. 3] représente une boucle de régulation du courant pouvant être mise en oeuvre dans le cadre de l'invention ;
[Fig. 4] représente une réalisation de moyens pour déterminer un courant de consigne dans le cadre de l'invention ;
[Fig. 5] représente un exemple de profil temporel de courant et de polarités d'éléments du pack de batterie, pouvant être mis en oeuvre dans le cadre de l'invention ;
[Fig. 6] représente un autre exemple de profil temporel de courant et de polarités d'éléments du pack de batterie, pouvant être mis en oeuvre dans le cadre de l'invention ;
[Fig. 7A]
[Fig. 7B]
[Fig. 7C]

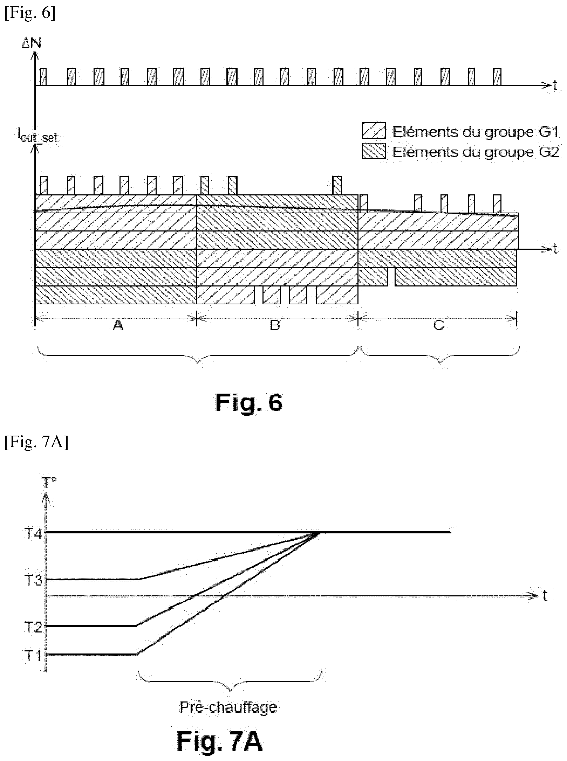

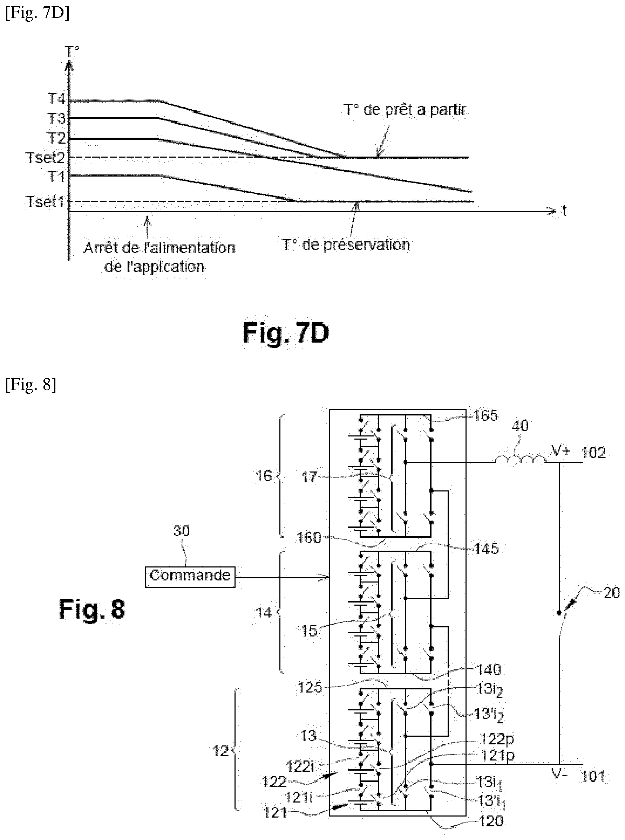

[Fig. 7D] les figures 7A-7D représentent divers exemples d'évolution de la température dans un pack de batteries mettant en oeuvre la présente invention ;

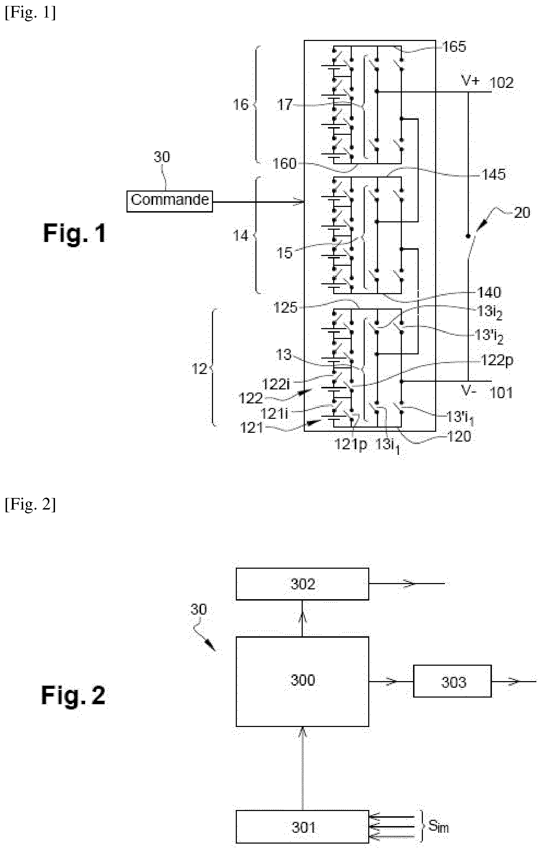

[Fig. 8] représente une variante du dispositif de la figure 1, avec une inductance en sortie ;

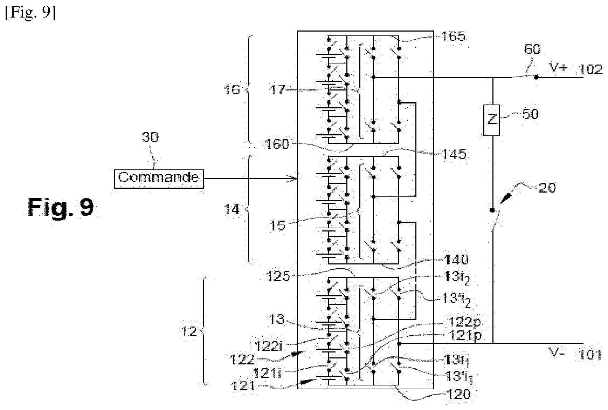

[Fig. 9] représente encore une autre variante d'un dispositif selon l'invention, avec plusieurs interrupteurs permettant d'en court-circuiter la sortie.

### EXPOSÉ DÉTAILLÉ DE MODES DE RÉALISATION PARTICULIERS

La figure 1 représente un pack batterie en architecture commutée, qui peut être mise en oeuvre dans le cadre de la présente invention.

Un tel pack peut comporter M modules (Ei, (1<i<M)) 12, 14, 16, chaque module comportant une pluralité de N cellules 121-124,141-144,161-164. En figure 1, M=3 et N=4, mais M peut être quelconque (par exemple 1≤M≤1000) et/ou le nombre N peut aussi être quelconque (par exemple 1≤N≤500) pour chaque module (par exemple, un module peut comporter une seule cellule); de plus, plusieurs modules peuvent comporter plusieurs séries de cellules, ces séries étant disposées en parallèle l'une de l'autre. Chaque module comporte une 1^{ère} borne 120, 140, 160 et une 2^{ème} borne 125, 145,165. Cette architecture à cellules commutées permet:
- de réguler un courant de charge lorsqu'il est connecté à une source de tension, continue ou alternative, en ajustant en temps réel le nombre de cellules placées en série ;
- et/ou de prélever sur un réseau AC un courant AC en phase avec la tension réseau grâce à un mécanisme de synchronisation ;
- et/ou d'assurer des services réseau en prélevant un courant déphasé par rapport à la tension réseau (compensation de puissance réactive) ou en ajoutant des harmoniques de courant ou pulse de courant pour améliorer la forme de la tension réseau/compenser des perturbations réseau ;
- et/ou de gérer de manière unitaire chaque élément du système (cellule ou groupe de cellules) et chaque élément peut être soit connecté en série avec les autres éléments du pack batterie, soit court-circuité (il n'y a alors plus de courant qui passe par la cellule ou les cellules de l'élément), soit mis en série, avec une polarité opposée, avec les autres éléments, ou éventuellement encore mis en parallèle d'un ou plusieurs autres éléments ;
- et/ou de générer, en sortie de la batterie, une tension fixe ou une tension variable (par exemple sinusoïdale), avec un pas égal à la tension d'un élément, en connectant, l'un après l'autre, les éléments directement à la sortie du système. En effet, un tel système peut faire évoluer dynamiquement le nombre d'éléments connectés en série, parmi les éléments disponibles ;
- et/ou, en présence par exemple d'une inductance de lissage et/ou via des inductances parasites, de réguler la tension de sortie pour suivre une tension de consigne quelconque, par exemple sinusoïdale.

Un « élément » au sens du présent texte peut comporter une cellule ou un groupe de cellules élémentaires qui peuvent être placées en série et/ou parallèle (formant un module) ; le pas de tension fournie par un élément peut être par exemple de l'ordre de 3.6 V, de 12V de 24V, de 48V ou d'une tout autre valeur.

Comme déjà indiqué ci-dessus, chaque cellule peut être mise en série ou en parallèle avec d'autres cellules du même module et/ou être remplacée par un court-circuit. A cette fin, des interrupteurs, par exemples des transistors, sont prévus. Dans cet exemple, comme les autres exemples ou modes de réalisation de la présente demande, les interrupteurs peuvent être réalisés à l'aide de transistors de puissance, de préférence de type NMOS, ou de transistors bipolaires, ou FET, ou JFET, ou IGBT. Les interrupteurs ainsi mis en oeuvre permettent d'utiliser ou non certaines cellules et/ou certains modules de cellules en fonction des besoins et/ou réaliser une optimisation de l'utilisation du pack batterie. Dans l'exemple illustré, chaque cellule est munie (seuls certains interrupteurs associés à la cellule 121 sont numérotés sur la figure 1) :
- d'un interrupteur de cellule 121ᵢ pour connecter ou déconnecter cette cellule de la batterie ; il est possible d'avoir plusieurs cellules en parallèle avec chaque cellule qui possède son interrupteur série ; dans ce cas, une cellule peut être déconnectée et le courant principal continue de passer au travers des cellules restant en parallèle ; et/ou on peut, comme dans FR2977986, basculer des cellules d'une configuration série à parallèle et inversement, et/ou écarter la cellule ;
- d'un interrupteur parallèle 121ₚ pour remplacer ou non, cette cellule par un court-circuit au regard du courant principal qui circule sur le chemin de puissance entre les bornes 101 et 102 du pack batterie.

Le pack de batterie et/ou chaque cellule, ou une ou plusieurs cellules, peu(ven)t être munie(s) d'un ou plusieurs capteur(s) de température ; éventuellement une ou plusieurs cellules, peu(ven)t être munie(s) d'un capteur de charge de la cellule et/ou d'un capteur de mesure de tension aux bornes de la cellule et/ou d'un capteur de déformation mécanique de la cellule et/ou d'un capteur de gaz dans la cellule (par exemple pour détecter une surcharge, ou une surchauffe ou une fuite qui peut engendrer la génération de gaz) et/ou d'un capteur acoustique (soit pour détecter une réaction chimique dans la cellule, ou bien, s'il s'agit d'un capteur de type ultrason, pour caractériser la cellule, de manière similaire au principe de l'échographie ou sous forme de caractérisation d'un canal acoustique) et/ou d'un capteur chimique, par exemple pour mesurer la densité d'ions Li libres ou autres dans la cellule.

Le dispositif peut comporter un circuit de commande 30 qui permet, notamment, de commander l'ouverture et la fermeture des interrupteurs des différentes cellules. Les signaux qui proviennent du ou des capteurs peuvent être transmis à ce circuit de commande.

De manière plus précise, comme illustré en figure 2, le circuit de commande 30 peut comporter :
- un processeur ou microprocesseur ou microcontrôleur ou FPGA (« Field Programmable Gate Arrays ») ou ASIC (« Application-Specific Integrated Circuit ») 300 spécialement adapté pour, ou programmé pour, mettre en oeuvre un procédé selon l'invention ;
- des moyens, ou un circuit, 301 pour recevoir des signaux Sᵢₘ de mesure de température d'un ou plusieurs capteurs associé(s) à un ou plusieurs éléments du pack batterie et pour fournir ces signaux au processeur ou microprocesseur 300; celui-ci peut comparer une ou des températures ainsi mesurées à une ou des températures de consigne et/ou peut comparer des températures de différentes cellules ou de différents éléments entre elles ;
- des moyens, ou un circuit, 302 pour contrôler l'état ouvert ou fermé des différents interrupteurs associés aux différentes cellules du pack batterie et/ou pour contrôler l'état ouvert ou fermé des différents interrupteurs des différents ponts en H (voir ci-dessous), sur instructions du processeur ou du microprocesseur ;
- des moyens, ou un circuit, 303 pour contrôler l'état ouvert ou fermé de l'interrupteur 20 de la figure 1, sur instructions du processeur ou du microprocesseur.

Une électronique spécifique (non représentée sur les figures) peut être associée à chaque module 12, 14, 16. Dans ce cas, l'unité de commande 30 peut avantageusement communiquer avec chaque électronique spécifique de chaque module, par exemple via un bus de communication, par exemple encore un bus partagé et isolé galvaniquement. Le circuit de commande 30 peut par exemple :
- envoyer à l'électronique spécifique de chaque module la position que doivent prendre les interrupteurs au sein du module, que ce soit les interrupteurs de cellule et/ou les interrupteurs du pont en H (voir ci-dessous) du module ;
- et/ou éventuellement recevoir de la part des modules des informations qui ont été mesurés localement par l'électronique de chaque électronique spécifique ;
- et/ou éventuellement accéder (recevoir ou lire) à des mesures plus globales, par exemple la tension du pack batterie et/ou le courant qui traverse le pack batterie. Ces mesures globales sont faites par des moyens de mesure (capteurs), par exemple associés à l'unité de commande sans passer par l'électronique des modules. De même, la commande de l'interrupteur 20 peut ne pas passer par l'électronique des modules, mais par une interface électronique entre le circuit de commande 30 et l'interrupteur 20. Selon une réalisation particulière, les moyens (ou circuits) 302 et 303 et/ou 301 peuvent être intégrés dans une même unité.

Un circuit de contrôle des moyens 20 peut être séparé, ou éventuellement être associé à un circuit de mesure globale (on peut noter que la mesure de courant de sortie peut être utile pour la régulation du courant).

Chaque module peut également comporter un pont en H 13, 15, 17 placé entre la 1^{ère} borne et la 2^{ème} borne du module, qui permet d'inverser ou non la polarité l'ensemble des cellules connectées au pont ; en variante, non représentée sur les figures, on peut mettre en oeuvre un permutateur commandé, par exemple un relais électromécanique qui fait permutateur (dans la suite, on ne décrit que la variante mettant en oeuvre des ponts en H, mais l'invention peut tout aussi bien être adaptée au cas de permutateurs).

Ce pont comporte les moyens interrupteurs 13ᵢ₁, 13ᵢ₂, 13'ᵢ₁, 13'ᵢ₂ ... (seuls les interrupteurs du pont en H 13 associé au module 12 sont numérotés sur la figure 1) permettant de mettre en série un module avec le module suivant et/ou de relier le module à une 1^{ère} borne (que l'on peut arbitrairement qualifier de borne d'entrée) 101 ou une 2^{ème} borne (que l'on peut arbitrairement qualifier de borne de sortie) 102 du pack. Sur chaque branche du pont en H, un point entre les interrupteurs de cette branche peut être relié à un point entre les interrupteurs d'une branche d'un pont en H d'un module voisin ou de la 1^{ère} borne 101 ou de la 2^{ème} borne 102 de l'ensemble du système.

Chaque module 12, 14, 16 de l'exemple de la figure 1 peut connecter à la sortie 1, 2, 3 ou 4 éléments en série, dans les 2 sens de la polarité. Plus généralement, pour M modules, chaque module i (1<i<M) comportant Nᵢ cellules (1<Nᵢ), chaque module peut connecter à sa sortie 1, 2...ou Nᵢ éléments en série, dans les 2 sens de la polarité.

Comme chaque module est indépendant, son pont en H peut être orienté de manière quelconque par rapport à celui des autres modules.

Des moyens 20 permettent de réaliser un court-circuit entre la borne d'entrée 101 et la borne de sortie 102 du pack ; ces moyens 20 comportent par exemple un interrupteur, par exemple un transistor du type mentionné ci-dessus, disposé entre cette entrée et cette sortie. Ces moyens 20 sont par exemple commandés par les moyens de commande 30 ou par un relai électromécanique. On peut noter que, en variante, une commande manuelle est possible, bien que moins intéressante car moins sure, elle peut être associée à un mécanisme de verrouillage pour empêcher un actionnement à un mauvais moment. Un exemple de procédé d'équilibrage de température selon l'invention, mettant en oeuvre un mode court-circuit à l'aide des moyens 20, est le suivant:
- les moyens 20 sont fermés ;
- une consigne de température d'un ou plusieurs éléments (cellules ou modules) est déterminée ;
- puis un ou plusieurs éléments à réchauffer sont sélectionnés; les éléments sont de préférence réchauffés par paire(s) ; si un seul élément est à réchauffer, il peut échanger avec tous les autres éléments à tour de rôle et donc être réchauffé avec une puissance moyenne beaucoup plus élevée que pour les autres (lui-même étant tout le temps en échange de courant alors que les autres ne voient le courant échangé que pendant une petite proportion du temps) ; le dispositif de commande 30 commande les interrupteurs des cellules, des modules et/ou des ponts en H pour faire circuler un courant d'un ou plusieurs de ces éléments vers un ou plusieurs autre(s) de ces éléments; autrement dit, on régule un courant entre ces éléments et des charges sont donc transférées d'un ou plusieurs de ces élément(s) vers un ou plusieurs autre(s) de ces élément(s);
- ce courant peut par exemple circuler tant que l'élément ou les éléments qui est/sont en cours de chauffage n'a/ont pas atteint un niveau de température prédéterminée, ou le même niveau de température qu'un ou plusieurs autre(s) élément(s).

La température de l'élément ou des éléments peut être mesurée et comparée à une température de consigne.

L'invention permet donc de procéder à un chauffage d'un ou plusieurs éléments, par exemple une ou plusieurs cellules ou encore un ou plusieurs modules.

Mais elle permet, alternativement au chauffage d'un ou plusieurs éléments, ou en plus de celui-ci, de:
- garantir une température minimale sur chaque élément (ex : T > 0°C) ;
- et/ou d'équilibrer les températures de 2 ou plusieurs éléments ;
- et/ou de maintenir, sur une portion de la batterie, une température minimale (par exemple pour garantir un service minimal lors d'une utilisation, par exemple un démarrage : réchauffement du reste de la batterie, maintient de fonctions de sécurité (par exemple les phares ou les feux stop d'un véhicule automobile...))
- et/ou faire remonter la température de la batterie, ou d'une partie de celle-ci, avant son utilisation, par exemple avant le démarrage d'un véhicule.

Là encore, la température peut être mesurée et comparée à une température de consigne que l'on souhaite atteindre. Ou bien, lorsque l'on souhaite équilibrer les températures de 2 ou plusieurs éléments, les températures de ces éléments peuvent-être mesurées et comparées.

Selon un mode de réalisation de l'invention, les moyens 30, à partir de l'information relative à l'ensemble des cellules ou des modules à réchauffer peuvent effectuer une répartition de ces cellules ou modules en deux groupes G1 et G2, par exemple sensiblement équivalent en termes de besoins d'être réchauffé (ce besoin étant par exemple exprimé en Wh thermique globale).

Il est ensuite possible de procéder à une régulation d'un courant d'échange entre les groupes G1 et G2 permettant par exemple de suivre un courant de consigne, lequel peut être préprogrammé ou calculé en fonction par exemple des propriétés des briques (par exemple selon une capacité à accepter un courant et/ou une limite en « C-rate » et/ou de l'état actuel d'un ou de plusieurs éléments ou cellules (p.ex. la température et/ou l'état de charge et/ou de santé ).

On peut noter que :
- le « C-rate » est une valeur de courant en Ampère ramenée à la capacité de la cellule en Ampère-heure ; ainsi, un courant de 5A tiré sur une cellule de 10Ah, correspond à un C-rate de 0.5. Il s'agit sensiblement d'une vitesse de charge ou de décharge (mais le courant de fin de décharge ou fin de charge est limité, ce qui empêche de conserver la valeur du C-rate jusqu'au bout): par exemple, un C-rate de 1 correspond à une charge ou décharge complète en 1h, un C-rate de 2 correspond à une charge ou décharge complète en 30minutes;
- l'état de charge peut être estimé par un algorithme d'estimation, par exemple à partir d'une mesure de la tension de la cellule, avantageusement complétée d'une mesure de température et avantageusement encore complétée d'une mesure de courant ; il existe à cette fin des algorithmes plus ou moins sophistiqués, tel que par exemple présenté dans l'article : M.A. Hannan, M.S.H. Lipu, A. Hussain, A. Mohamed, « A review of lithium-ion battery state of charge estimation and management system in electric vehicle applications: Challenges and recommendations », Renewable and Sustainable Energy Reviews, Volume 78, 2017, Pages 834-854, ISSN 1364-0321, https://doi.org/10.1016/j.rser.2017.05.001;
- pour mesurer l'état de santé, on peut mesurer le nombre d'Ampère-heure que la cellule peut stocker ; pour cela, on fait par exemple une décharge-recharge ou une recharge-décharge complète et on compter le nombre d'Ampère-heure pour passer d'un état complètement déchargé à un état complètement rechargé ou inversement. Il existe des algorithmes plus ou moins sophistiqués pour éviter d'avoir à faire cette excursion complète d'état de charge. Selon un exemple on peut mesurer un nombre d'Ampère-Heure qui sépare deux états de charge, par exemple estimé via les méthodes décrites précédemment et, par extrapolation, en déduire le nombre total d'Ampère-heure.

De préférence, la régulation est effectuée tout en maximisant le nombre d'éléments mis en jeu dans les groupes G1 et G2 : le plus petit groupe fixe sensiblement le nombre d'éléments utilisables dans le plus grand groupe. Le nombre maximum d'éléments en jeu est donc sensiblement 2 fois le nombre d'éléments du plus petit groupe ; maximiser l'utilisation des éléments du plus petit groupe revient à maximiser le nombre total d'éléments mis en jeu. De préférence, on a 2 groupes identiques ou relativement similaires en nombre d'éléments et en besoin d'échauffement. Ainsi, si les deux groupes sont identiques ou similaires, le courant n'est pas plus limité par un groupe que par l'autre et de même pour le nombre d'éléments. Une maximisation de ce nombre d'éléments dans chacun des groupes peut être réalisée de la manière suivante.

Le groupe G1 fournit une première tension U_{G1} et le groupe G2 fournit une seconde tension U_{G2} de polarité inversée (avec des moyens d'inversion de polarité, par exemple les ponts en H décrits ci-dessus en figure 1).

Le courant évolue sensiblement en i = (U_{G1}+U_{G2})/(L^{∗}t) si on néglige les pertes, L représentant l'inductance placée en sortie, par exemple tel qu'en figure 8, ou par exemple encore la composante imaginaire de l'impédance complexe Z de la figure 9**Erreur ! Source du renvoi introuvable..** Dans certains cas, l'impédance propre des câbles et des cellules peut suffire à filtrer le courant (par exemple si la fréquence de pilotage est suffisamment élevée au regard de la longueur du câblage).

Le courant dépend en fait de l'écart ΔU=U_{G1}-(-U_{G2}), la boucle de régulation en courant agissant sur ce ΔU pour réguler le courant échangé.

Un même ΔU peut être obtenu pour différentes valeurs de U_{G1} et de U_{G2} et on peut obtenir la valeur de ΔU souhaitée par une boucle de régulation avec le couple (U_{G1}, U_{G2}) qui maximise |U_{G1}|+|U_{G2}|. Cela correspond à la maximisation du nombre de cellules impliquées dans les échanges : pour un même courant échangé, si on maximise la tension, on maximise le nombre d'éléments connectés et donc le nombre d'éléments réchauffés.

Pour obtenir cette maximisation, on sait que U_{G1}= -U_{G2}+ΔU ou encore U_{G2}= -U_{G1}+ΔU. On fixe par exemple U_{G2} à sa valeur minimale U_{G2min} et on calcule U_{G1calculé}= -U_{G2min}+ΔU:
- si U_{G1calculé} est inférieur à U_{G1max} on garde ces valeurs ;
- si U_{G1calculé} est supérieur à U_{G1max}, alors on fixe U_{G1} à sa
valeur maximale U_{G1max} et on calcule U_{G2calculé}= -U_{G1max}+ΔU.

On peut aussi se fixer une polarité de tension inversée. Dans ce cas on fixe U_{G2} à sa valeur maximale U_{G2max} et on calcule U_{G1calculé}=-U_{G2max}+ΔU:
- si U_{G1calculé} est supérieur à U_{G1min} on garde ces valeurs;
- si U_{G1calculé} est inférieur à U_{G1min}, alors on fixe U_{G1} à sa valeur minimale U_{G1min} et on calcule U_{G2calculé}=-U_{G1min}+ΔU.

On a ainsi défini une valeur maximale et une valeur minimale de tension durant l'échange de courant ; ensuite, on peut prendre la tension max, ou la tension min ou encore alterner entre la tension max et la tension min, par exemple selon un signal carré. En variante, on peut adopter toute forme d'onde pour la tension, par exemple une forme sinusoïdale dont l'excursion va de la tension min à la tension max ainsi calculée.

En variante, le fonctionnement peut être le suivant (sans recherche de la maximisation de l'amplitude des tensions U_{G1} et U_{G2} et/ou du nombre d'éléments en jeu parmi les groupes G1 et G2) : par exemple on définit une amplitude inférieure à Min(U_{G1max},U_{G2max}), par example ½ Min(U_{G1max},U_{G2max}) ou encore : Min(U_{G1max},U_{G2max}) - Marge,
la « Marge » pouvant par exemple être suffisante pour que la boucle de régulation en courant, qui ajuste la tension autour de cette valeur cible, n'aille pas trop souvent en butée de tension, ce qui pourrait la rendre instable.

Un algorithme ou un procédé mis en oeuvre selon l'invention peut donc comporter les étapes suivantes, dont chacune a été décrite de manière détaillée ci-dessus :
- étape 1 : détermination des consignes de température ;
- étape 2 : sélection des éléments à réchauffer puis répartition en 2 groupes G1 et G2, éventuellement avec maximisation du nombre d'éléments dans chacun des groupes (ou bien, comme déjà expliqué ci-dessus, on tend vers, ou on cherche à avoir, 2 groupes identiques ou similaires en terme de nombre d'éléments et de besoin d'échauffement);
- étape 3 : régulation d'un courant d'échange entre les deux groupes ;
- étape 4 : retour à l'étape 1.

Les moyens 30 peuvent :
- procéder à la détermination et la sélection des étapes 1 et 2, avec maximisation éventuelle ;
- commuter les différents commutateurs du système pour faire circuler le courant d'échange (étape 3).

Par conséquent, la détermination de la ou des température(s) et/ou du courant à faire circuler et/ou de la stratégie d'ouverture et/ou fermeture des différents commutateurs du pack batterie, et/ou ces ouvertures et/ou fermetures des différents commutateurs du pack batterie, peut/peuvent être réalisé(e)(s) ou déterminé(e)(s) par les moyens 30.

Ces moyens 30 peuvent également arrêter l'équilibrage en température, par exemple lorsqu'une température de consigne est atteinte pour tout ou partie du pack ou bien lorsque plusieurs éléments atteignent la même température, par ouverture de l'interrupteur 20.

Quelle que soit la stratégie retenue pour définir G1, G2 et/ou les tensions associées, l'échauffement est causé par la valeur efficace du courant. Il est donc possible d'échauffer les éléments ou les cellules avec un courant moyen échangé nul. Ce courant peut donc avoir n'importe quelle forme, par exemple une forme périodique à moyenne nulle (carré, ou sinusoïdale, ou triangle) à laquelle on peut éventuellement superposer une composante continue pour assurer par exemple un équilibrage d'état de charge entre les briques. En alternative, le courant peut être constant et ce sont les tensions U_{G1} et U_{G2} qui sont alternatives et qui peuvent éventuellement inclure une composante continue. Enfin, il est possible d'avoir les deux (tension et courant variables), avec une puissance instantanée périodique et comportant éventuellement une composante non nulle pour assurer de l'équilibrage.

L'équilibrage, par exemple en charge, d'un pack de batterie selon l'invention peut aussi avoir été effectué dans un premier temps (par exemple dès l'arrêt du véhicule), le réchauffage selon l'invention s'effectuant ensuite, par exemple à courant moyen quasinul pour une cellule réchauffée et en effectuant des va-et-vient de courant.

Un équilibrage des charges entre les éléments peut être à réaliser, par exemple après un arrêt prolongé, si on a par exemple un effet d'auto-décharge non homogène et un effet de relaxation conduisant à des tensions relaxées non homogènes. On peut alors réaliser un équilibrage, avec un courant moyen relativement faible devant le courant nominal. Au contraire, les courants échangés en allers-retours pour préchauffer selon l'invention sont significativement plus élevés en amplitude (au moins un facteur 3). L'échauffement lié à la composante continue peut être la plupart du temps négligée, il est toutefois possible de la prendre en compte en réduisant d'autant la composante AC pour viser le courant efficace d'échauffement souhaité.

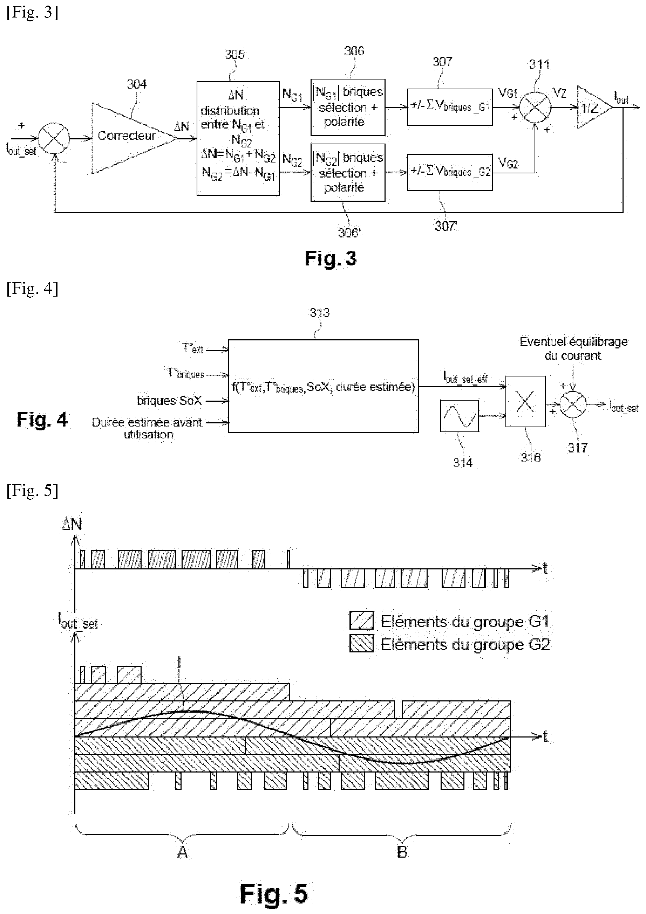

La figure 3 représente une boucle de régulation du courant pouvant être mise en oeuvre dans le cadre de l'invention, par exemple par les moyens 30.

Cette boucle de régulation permet de réguler le courant sortie lout pour lui faire suivre un courant de consigne lout_set.

Tous les éléments de contrôle (soustracteur de gauche, 304, 305, 306, 306' etc) de la boucle de régulation de la figure 3 peuvent être implémentés par un même calculateur, de même que, éventuellement :
- les fonctions de la figure 4 (décrite ci-dessous) ;
- et/ou éventuellement le traitement des données reçues, et/ou la préparation des données ou des trames de commande à envoyer aux modules.

La boucle de régulation, avec la sortie du pack placée en court-circuit par les moyens 20, régule le courant Iₒᵤₜ qui circule dans ces moyens 20 à partir d'un courant de consigne I_{out_set}; Iₒᵤₜ correspond aussi au courant qui est échangé entre les groupes G1 et G2.

L'écart entre Iₒᵤₜ et I_{out_set} entre dans un régulateur (correcteur 304) qui peut être de tout type, par exemple un PID (Proportionnel Intégrale Dérivé) ou encore intégrant des mécanismes de prédiction ou de modèle inverse. Ce correcteur 304 détermine l'écart, à chaque instant, en nombre N de briques entre les groupes G1 et G2, les groupes G1 et G2 étant de polarité opposée (ΔN=N_{G1}+N_{G2}).

Le bloc 305 « ΔN distribution », détermine le nombre de briques |N_{G1}| à exploiter dans le groupe G1 et le nombre |N_{G2}| à exploiter dans le groupe G2, et ce en respectant la condition N_{G1}+N_{G2}=ΔN. Autrement dit, puisqu'il existe plusieurs combinaisons (N_{G1}, N_{G2}) qui peuvent produire un même ΔN, une fonction de choix ou d'arbitrage peut être mise en oeuvre, ici par les moyens 305. Ces moyens peuvent retenir ou choisir une combinaison, parmi les combinaisons possibles, par exemple qui maximise le nombre d'éléments mis en jeu (critère de choix). Plus généralement, on peut choisir différentes options:
- maximisation de |U_{G1}|+|U_{G2}|;
- ou se placer à une amplitude un peu éloignée des butées maximales/minimales ; par exemple une amplitude en dessous de Min (UG1ₘₐₓ, UG2ₘₐₓ, -UG1ₘᵢₙ, -UG2ₘᵢₙ);
- ou ajuster l'amplitude en fonction de la dispersion de température entre les différents éléments (une amplitude plus faible induisant une sélection d'un nombre plus réduit d'éléments et une gestion plus individuelle ; une amplitude plus grande induisant une sélection d'un nombre plus grand d'éléments qui vont voir un courant plus homogène, surtout si la forme d'onde est un carré ou une tension continue).
- ou ajuster la tension U_{G1} et/ou U_{G2}, en fonction du courant de consigne ; par exemple : lorsque le courant de consigne est élevé, seules les cellules devant être les plus chauffés sont susceptibles d'être connectées et plus le courant diminue, plus le nombre de cellules susceptibles d'être connectées augmente.
- ou ajuster en temps réel une proportion de temps de connexion, pour chaque cellule de chaque groupe, en fonction de l'écart, pour chaque cellule, avec sa température cible. Cet ajustement peut par exemple être calculé via une boucle de régulation. Par exemple les cellules qui ont le plus besoin d'être réchauffés sont connectés en permanence et d'autres, pour lesquelles le besoin de réchauffement est moindre, sont connectées seulement une proportion du temps, par exemple x ms toutes les secondes ; cette proportion est par exemple fonction de l'écart par rapport à une température cible/de consigne. La cellule qui présente le plus gros écart de température avec sa température cible est par exemple connectée 100% du temps et les autres cellules sont connectées a% du temps, ce a% étant par exemple le rapport de l'écart de température de la cellule considérée par rapport à sa température cible relativement à l'écart de température maximale qu'a la cellule connectée pendant 100% du temps. On cherche également à respecter le ΔN, donc à réaliser un ajustement dans le degré de liberté qu'autorise NG1+NG2=ΔN. Le bloc 306 « |N_{G1}| briques sélection + polarité » sélectionne, dans le groupe G1, |N_{G1}| briques à connecter et les positionne selon la bonne polarité au regard du signe de N_{G1}. Cette sélection est effectuée par rapport à un objectif : l'équilibrage en température et/ou l'atteinte d'une température minimale et/ou la montée en température de tout ou partie du pack. Un élément qui nécessite d'être plus fortement réchauffé que les autres pourra être connecté de manière prioritaire. Il est en outre possible de gérer une liste de priorité en fonction d'un écart, pour chaque élément, entre sa température et une température de consigne que l'on souhaite atteindre pour cet élément. Les groupes G1 et G2 peuvent en outre être remis régulièrement à jour en fonction de l'évolution des besoins en termes d'échauffement sur l'ensemble des éléments du pack batterie.

Le bloc 306' « |N_{G2}| briques sélection + polarité » a la même fonction, mais pour le groupe G2.

Le bloc 307 « +/-∑V_{briques_G1} » représente le fonctionnement du système, c'est-à-dire une estimation de la tension V_{G1} générée par l'ensemble des briques du groupe G1 sélectionnées et connectées en série et incluant la polarité (+/-) de cette connexion, les éléments du groupe G1 étant connectés selon une polarité inverse à celle des briques du groupe G2.

Le bloc 307' « +/-∑V_{briques_G2} » a la même fonction mais pour le groupe G2.

Le bloc 311 « additionneur », placé en sortie des 2 blocs précédents, détermine la tension aux bornes de l'impédance Z, cette impédance Z représentant l'impédance équivalente du pack batterie complétée d'une éventuelle impédance complémentaire placée sur le chemin de rebouclage en sortie du pack, par exemple une inductance. L'impédance Z peut être une impédance complexe avec une partie réelle (composante résistive de l'impédance) et une partie imaginaire (composante inductive de l'impédance).

La figure 4 représente une réalisation de moyens pour déterminer un courant de consigne I_{out_set} dans le cadre de l'invention.

Comme indiqué plus haut, l'échauffement des différents éléments dépend du courant efficace qui traverse les briques (pertes=RI², à noter toutefois que la composante réelle « R » de l'impédance des cellules batterie dépend de la fréquence, auquel cas « R » est considéré au regard de la fréquence du courant vu par les cellules).

Les moyens 313 (par exemple un calculateur (tel qu'un micro-contrôleur, ou processeur, ou FPGA, ou ASIC... ; ces moyens sont avantageusement dans les moyens 30) déterminent la valeur/le profil de ce courant efficace I_{out_set_eff} en fonction, par exemple :
- du besoin d'échauffement, lié par exemple à la température actuelle des éléments («T°_{éléments}»), et/ou à la température externe «T°ₑₓₜ» et/ou à l'état de la batterie « Briques SoX », par exemple à son état de charge (SoC) et/ou de santé (SoH) (voir ci-dessus pour des explications concernant l'estimation de ces paramètres) ;
- et/ou de la capacité des éléments à accepter un courant : par exemple, à basse température, en fin de charge ou encore en fin de décharge, les éléments peuvent ne pas tolérer un courant aussi élevé qu'à une autre température, par exemple 25°, et à un état de charge intermédiaire ;
- et/ou de la durée estimée (« time-to-use estimation ») avant que la batterie soit utilisée, si cette donnée est connue. Dans le cas où c'est l'utilisateur qui lance un préchauffage selon l'invention, cette durée peut n'être connue qu'au dernier moment et, de préférence, on pourra alors effectuer un pré-chauffage rapide. Mais on peut aussi mettre en oeuvre un algorithme de prédiction, qui permet de connaître à l'avance le besoin de préchauffage et dans ce cas, le programme de préchauffage pourra définir un profil de courant de consigne I_{out_set_eff'} qui optimise à la fois l'énergie dépensée pour préchauffer et la durée de vie de la batterie.

Le bloc « Normalised waveform » 314 de la figure 4 correspond à la forme d'onde que l'on veut en terme de courant, il peut s'agir d'une valeur continue, ou d'une onde périodique, par exemple sinusoïdale, carré, triangle ou autre. Son amplitude est par exemple normalisée de sorte à présenter une valeur efficace unitaire.

En multipliant cette forme d'onde par la consigne intermédiaire I_{out_set_eff'} on retrouve ainsi une forme d'onde qui a une valeur efficace correspondant à cette consigne.

La fréquence de la forme d'onde peut être optimisée pour maximiser l'échauffement, c'est par exemple la fréquence où la composante réelle de l'impédance de la cellule est maximale, avec toutefois des bornes fₘᵢₙ et fₘₐₓ de fréquence :
- la borne fₘᵢₙ peut être telle que la quantité d'énergie échangée sur une demi-période n'engendre pas une trop grande variation d'état de charge des briques (fₘᵢₙ par exemple > 0.01Hz) et ce notamment à proximité des zones de fin de charge ou de décharge ;
- la borne fₘₐₓ peut quant à elle être limitée par les capacités maximales du dispositif à générer une forme d'onde haute fréquence ainsi que par les pertes que l'on peut avoir dans les composants électroniques qui permette de la produire (pertes qui augmentent avec l'augmentation de la fréquence des commutations).

Enfin, dans le cas d'une forme d'onde alternative, il est possible de rajouter une composante continue pour assurer un transfert de puissance moyen non nul, permettant de réaliser en outre un équilibrage entre les cellules et/ou les modules, par exemple un équilibrage d'un état de charge.

La figure 5 représente un exemple de profil temporel de courant et de polarités d'éléments du pack de batterie, pouvant être mis en oeuvre dans le cadre de l'invention. Dans cet exemple, l'onde de courant I est sinusoïdale et la polarité des éléments de chaque groupe (G1, G2) n'évolue pas au cours du temps. Ce cas est notamment celui d'un exemple dans lequel, dans une première partie A du processus, au moins 4 éléments doivent être chauffés dans le groupe G1 et au moins trois éléments doivent être chauffés dans le groupe G2. Dans la deuxième partie B du processus, il n'y a plus que 2 éléments à chauffer dans le groupe G1 et au moins 3 éléments dans G2 (voir en figure 5 la présence alternée de 2 et 3 éléments du groupe G2 en dessous de l'axe temporel, dans la partie B). Le courant est par exemple régulé en temps réel en agissant sur ΔN, puis est déterminé un couple (N_{G1}, N_{G2}) qui sélectionne à chaque instant les briques prioritaires à réchauffer tout en respectant la condition N_{G1}+N_{G2}=ΔN.

Si N_{G1} est de polarité positive et N_{G2} de polarité négative : ΔN=N_{G1}-|N_{G2.}|

Plus généralement ΔN correspond à la différence d'éléments connectés entre les groupes G1 et G2. Dans l'exemple, le groupe G2 est connecté en polarité négative et on fait l'hypothèse que les tensions V_{G1} et V_{G2} sont proportionnelles à respectivement N_{G1} et N_{G2}. De ce fait, on suppose ici que l'écart V_{G1}-|V_{G2}| est proportionnel à ΔN. On considère par ailleurs que l'impédance Z présente un comportement résistif qui fait qu'un ΔN positif induit un courant positif et un ΔN négatif induit un courant négatif. L'impédance Z a par ailleurs une composante inductive qui tend à lisser le courant I.

Sur la partie A, N_{G1} est plus grand que |N_{G2}| (ΔN>0) ce qui induit un courant I positif qui suit une arche de sinus positive. Sur la partie B, N_{G1} est plus petit que |N_{G2}| (ΔN<0) ce qui induit un courant I négatif qui suit une arche de sinus négative.

En pratique, ΔN fonctionne sensiblement à la manière d'une PWM pour induire un courant qui suit un courant de consigne, ici sinusoïdal.

En variante, la consigne de courant I_{out_set} peut ne pas être modulée par une forme d'onde alternative, et à la place, c'est la polarité des groupes G1 et G2 qui est modulée, comme illustrée en figure 6. Sur cette dernière, le courant est sensiblement constant et on distingue 3 phases de chauffage A, B, C, la polarité de chaque groupe G1, G2 changeant d'une phase à la suivante.

En figure 6, de la même manière que précédemment, ΔN= N_{G1}+N_{G2}. Sur cette figure 6 :
- sur la phase A et sur la phase C, N_{G1} est en polarité positive et N_{G2} en polarité négative, par conséquent ΔN= N_{G1}-|N_{G2}|;
- sur la phase B, N_{G1} est en polarité négative et N_{G2} en polarité positive, par conséquent ΔN= -|N_{G1}| +N_{G2}.

Sur toute la longueur du profil, ΔN = N_{G1}+N_{G2} oscille entre 0 et 1, sa valeur moyenne glissante est toujours positive engendrant un courant I toujours positif avec toutefois une petite variation du fait que les pulses positifs sont un peu plus large à gauche qu'à droite induisant une moyenne glissante et donc un courant un peu plus élevé à gauche qu'à droite.

Ce cas est notamment celui d'un exemple dans lequel au moins 4 éléments doivent être chauffés dans chaque groupe G1 et G2 au cours des deux premières phases A, B; au cours de la troisième phase C, il n'y a plus que 2 éléments à chauffer dans le groupe G2 (et 3 éléments dans G1).

Utiliser un courant alternatif ou une tension alternative permet d'obtenir une puissance moyenne échangée nulle dans la durée : <U_{G1}^{∗}Iₒᵤₜ>=<U_{G2}^{∗}Iₒᵤₜ>≈0. A l'échelle d'une période, on a durant une demi-période un transfert de puissance dans un sens, puis durant la seconde demi-période, un transfert de puissance dans l'autre sens. La durée d'une période est typiquement au moins 100 fois inférieure à la durée de charge/décharge de la batterie, de sorte que la variation d'état de charge sur une demi-période reste faible/négligeable. En fin de charge/décharge, cette période peut être réduite de sorte à ne pas aller en surcharge/sous-charge. En variante, ou en complément, l'amplitude du courant peut être réduite à l'approche de la fin de charge/décharge. En pratique, pour une période réduite par exemple à 1s, la quantité d'énergie échangée est extrêmement réduite au regard de l'énergie stockable dans la batterie (le rapport (quantité d'énergie échangée) / (quantité d'énergie stockable) est par exemple <1/1000) pour un courant de 3C (3C=3 fois la capacité C de la cellule en Ah, 1Ah impliquant un courant de 3×1Ah=3A).

On note que, selon la figure 6, les groupes G1 et G2 peuvent changer de polarité, par exemple régulièrement, alors que le courant I_{out set} est sensiblement constant ou évolue lentement. En fait on cherche à ce que la puissance P=U^{∗}I fasse des va-et-vient, ce qui peut être obtenu en alternant U ou en alternant I (voir les deux si ce n'est pas à la même fréquence ou à un multiple de fréquence).

Les figures 7A-7D représentent divers exemples d'évolution de la température dans un pack de batteries mettant en oeuvre la présente invention ;
- la figure 7A représente l'évolution des températures de différents éléments dans un pack de batterie, comportant une période de chauffage (ou de pré-chauffage) selon l'invention, afin de faire converger les températures des différents éléments vers la température de l'élément le plus chaud ;

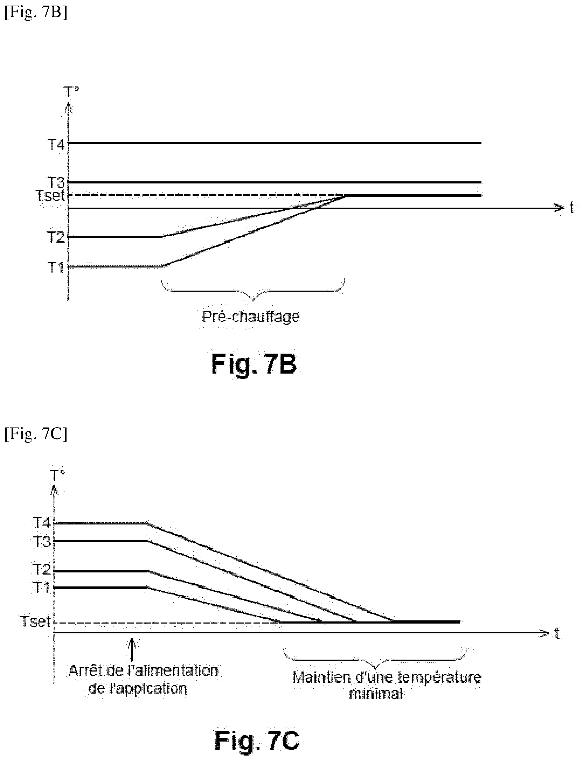

- la figure 7B représente l'évolution des températures de différents éléments dans un pack de batterie, comportant une période de chauffage (ou de pré-chauffage) selon l'invention, afin d'atteindre, pour les différents éléments qui étaient à une température inférieure à Tset = T4, cette température minimum Tset, qui devient alors commune à l'ensemble des éléments ;
- la figure 7C représente l'évolution des températures de différents éléments dans un pack de batterie, afin d'atteindre, pour les différents éléments, une température minimum, laquelle peut ensuite être maintenue par un procédé selon l'invention ; à noter que la phase de baisse de la température a lieu sans intervention (la température baisse toute seule), l'objectif étant ici de déclencher un procédé selon l'invention si jamais la température d'au moins une cellule tend à descendre en dessous de Tset (température minimum de consigne) pour maintenir la/les cellules à au moins cette température Tset. Après une phase de chute de température (par exemple du fait que le pack est dans un véhicule garé au froid, par exemple en altitude dans une station de ski), un procédé selon l'invention peut être mis en oeuvre, par exemple selon une stratégie selon l'une des figures 7B et 7C, en vue d'obtenir un dispositif toujours prêt à être opérationnel (dans le cas d'un véhicule, il est toujours prêt à partir) et/ou en vue de préserver la durée de vie des différents éléments ; dans le cas de la figure 7C, une phase de chauffage supplémentaire, selon l'invention, peut être effectuée avant démarrage ;
- la figure 7D représente l'évolution des températures de différents éléments dans un pack de batterie, comportant une période de chauffage selon l'invention, afin de maintenir, pour les différents éléments, des températures minima différentes. Selon un mode de réalisation de l'invention, le pack de batterie peut être subdivisé en sous-groupes de température.

Par exemple, une partie de la batterie est maintenue à une température Tₛₑₜ₂, par exemple suffisante pour fournir des appels de courant si jamais on démarre une application, et sur une autre partie du pack on garantit une température minimale Tₛₑₜ₁ de préservation de la batterie. Par exemple, cette deuxième partie de la batterie peut ne devenir pleinement disponible qu'après une certaine durée d'alimentation de l'application.

Par exemple encore, dans le cas de la figure 7D, pour minimiser le besoin de chauffage, les groupes se forment à partir de la température initiale des éléments : si on a besoin de 2 éléments prêts à partir, on active la chauffe lorsque la température d'au moins une des 2 cellules de température les plus élevées atteint Tset2, afin de la maintenir à Tset2. Pour les autres, on attend que leur température atteigne Tset1 pour les maintenir à Tset1. La tendance à la baisse de la température des cellules est typiquement liée à une faible température extérieure.

En variante du schéma de la figure 7D, la température de T3 pourrait par exemple passer en dessous de Tset2 avant que T2 n'atteigne Tset2, ce qui peut arriver par exemple si la cellule à T2 est au centre du pack alors que la cellule à T3 est en bordure de pack et se refroidit plus vite sous l'effet du froid extérieur.

Tous les procédés décrits ci-dessus peuvent être mis en oeuvre avec le dispositif décrit précédemment en lien avec la figure 1.

En variante, illustrée en figure 8, une inductance 40 de lissage, par exemple placée en sortie du pack batterie, permet de lisser le courant en sortie de celui-ci. Encore en variante (non représentée sur les figures) une inductance peut être répartie dans le pack batterie, par exemple en sortie de chaque module ou de chaque élément. Dans ce cas, l'interrupteur 20 est placé après l'inductance 40, comme en figure 8, afin de bénéficier aussi de cette inductance lors de la régulation du courant interne du pack batterie lorsqu'il est placé en position de court-circuit en sortie.

Une variante est illustrée en figure 9 : si, en sortie du pack batterie, il n'y a pas d'inductance, on peut en ajouter une (références 50 sur la figure 9) en série de l'interrupteur 20, afin de lisser le courant pendant l'équilibrage et aussi mieux le contrôler. Cette inductance ne sera pas utilisée dans le fonctionnement normal du pack. Alternativement, à la place de l'inductance, il peut y avoir un ou plusieurs composants électroniques, actifs ou passifs, permettant de limiter le courant.

Avec un tel composant en série à la sortie du système, la tension entre le pôle positif et le pôle négatif ne sera pas complètement nulle pendant l'équilibrage. Un second interrupteur 60 peut alors être utile pour éviter d'alimenter l'équipement branché sur le pack batterie avec cette tension résiduelle :
- en fonctionnement normal, l'interrupteur 20 est ouvert et l'interrupteur 60 est fermé ;
- pendant la phase de chauffage par court-circuitage de la sortie, l'interrupteur 60 est ouvert, et l'interrupteur 20 est fermé, soit en permanence soit avec un rapport cyclique variable.

Tous les procédés décrits ci-dessus peuvent être mis en oeuvre avec le dispositif qui vient d'être décrit, que ce soit en lien avec la figure 8 ou avec la figure 9.

Selon un exemple, l'invention peut être appliquée pour chauffer une batterie d'un véhicule. On peut prendre l'exemple d'un véhicule électrique utilisé dans un climat froid, par exemple en montagne en hiver. Le véhicule est garé le matin, la batterie se refroidit durant la journée et, au moment du départ, la batterie est trop froide pour être utilisée (par exemple la température est de - 30°C). Les éléments situés en bordure du pack batterie sont descendus à une température plus basse que celles du centre de la batterie. Un courant alternatif est alors échangé entre les éléments, avec un courant efficace d'autant plus élevé que la température de la brique considérée est basse. Ce mécanisme permet alors de faire remonter la température de chacun des éléments de la batterie vers une température de consigne.

En alternative, les éléments de la batterie sont maintenus au-dessus d'une température minimale durant toute la journée, de manière à augmenter leur durée de vie et/ou à rendre la batterie disponible à tout moment.

## Revendications

1. Dispositif de type pack de batterie comportant une première borne (101), une deuxième borne (102) et une pluralité d'éléments de stockage d'énergie entre ladite première borne et ladite deuxième borne, chaque élément comportant par exemple une ou plusieurs cellules électrochimiques et/ou une ou plusieurs capacité(s) et/ou une ou plusieurs super capacité(s) et/ou une ou plusieurs cellule(s) de stockage, chaque élément comportant:
a) - des moyens de commutation pour le connecter avec au moins un autre élément, ou pour le déconnecter d'un ou plusieurs autres éléments;
b) des moyens conducteurs (15, 17, 121p, 122p) pour conduire un courant, dit courant principal, parallèlement à l'élément, lorsque celui-ci est déconnecté ou n'est pas connecté avec un ou plusieurs autres éléments;
le dispositif comportant en outre :
c) - des moyens (20) pour établir un court-circuit entre une première borne (101) et une deuxième borne (102) de la batterie lorsque celle-ci est déconnectée ou fournit une tension nulle ;
d) des moyens (30) de contrôle, spécifiquement adaptés pour :
- sélectionner au moins un premier élément de stockage d'énergie et au moins un deuxième élément de stockage d'énergie, au moins un de ces différents éléments étant à réchauffer, pour faire circuler un courant au moins du premier élément vers au moins le deuxième élément lorsque la première borne (101) et la deuxième borne (102) du dispositif sont court-circuitées ;
- arrêter le courant lorsque au moins une température de consigne pour au moins un ou plusieurs éléments du pack, par exemple au moins un des 2 éléments ci-dessus et/ou pour une partie du pack de batterie et/ou pour le pack de batterie est atteinte et/ou lorsque au moins 2 éléments ont sensiblement une même température.

2. Dispositif selon la revendication 1, les moyens (30) de contrôle étant spécialement adaptés pour :
a) calculer au moins la valeur et/ou le profil d'un courant de chauffage (I_{out_set_eff}) en fonction :
- d'une température d'un ou plusieurs éléments et/ou d'une température externe (T°ₑₓₜ) et/ou d'un état de la batterie, par exemple un état de charge (SoC) et/ou de santé (SoH);
- et/ou de la capacité des éléments de la batterie à accepter un courant ;
- et/ou d'une durée estimée avant que la batterie soit utilisée.
b) et/ou calculer un courant de chauffage (I_{out_set_eff}) en fonction d'une forme d'onde du courant.

3. Dispositif selon l'une des revendications 1 ou 2, le courant ayant :
- une forme continue ou étant constant ;
- ou une forme d'onde périodique, par exemple sinusoïdale, ou en carré, ou en triangle, à laquelle est superposée une éventuelle composante continue, permettant par exemple de réaliser un réajustement de l'état de charge entre les éléments,
ou bien
- le courant ayant une forme continue ou étant constant ;
- et les tensions fournies au moins par le premier élément de stockage d'énergie et au moins par le deuxième élément de stockage d'énergie, étant alternatives, et incluant éventuellement une composante continue.

4. Dispositif selon l'une des revendications 1 à 3, le courant ayant une fréquence pour laquelle la composante réelle d'une impédance d'au moins un élément est maximale.

5. Dispositif selon l'une des revendications 1 à 4, les moyens (30) de contrôle étant en outre spécialement adaptés pour :
- effectuer une répartition des éléments à réchauffer en deux groupes d'éléments G1 et G2;
- faire circuler le courant du groupe G1 d'éléments au groupe G2, puis éventuellement du groupe G2 d'éléments au groupe G1,
- les moyens (30) de contrôle pouvant être en outre spécialement adaptés pour maximiser |U_{G1}|+|U_{G2}|,U_{G1} U_{G1} (resp. U_{G2}) étant la tension fournie par le groupe G1 (resp.G2).

6. Dispositif selon l'une des revendications 1 à 5, comportant une boucle de régulation du courant, par exemple ladite boucle de régulation du courant déterminant un nombre (NG1) de premiers éléments de stockage d'énergie et un nombre (NG2) de deuxièmes éléments de stockage d'énergie, ainsi que la tension (VG1) fournie par l'ensemble des premiers éléments de stockage d'énergie et la tension (VG2) fournie par l'ensemble des deuxièmes éléments de stockage d'énergie

7. Procédé de chauffage dans un dispositif de type pack de batterie comportant une première borne (101), une deuxième borne (102) et une pluralité d' éléments de stockage d'énergie entre ladite première borne et ladite deuxième borne, chaque élément comportant par exemple une ou plusieurs cellule(s) électrochimique(s) et/ou une ou plusieurs capacité(s) et/ou une ou plusieurs super-capacité(s) et/ou une ou plusieurs cellule(s) de stockage, chacun étant associée avec des moyens de commutation pour le connecter ou le déconnecter d'un ou plusieurs autres éléments, ce procédé comportant :
a) - l'établissement d'un court-circuit entre la première borne (101) et la deuxième borne (102) du pack de batterie lorsque celui-ci est déconnecté ou fournit une tension nulle ;
b) - la sélection d'au moins un premier élément de stockage d'énergie et d'au moins un deuxième élément de stockage d'énergie, dont l'un au moins doit être réchauffé ;
c) - la circulation d'un courant entre le premier élément et le deuxième élément;
d) - l'arrêt du courant lorsque au moins une température de consigne pour au moins un ou plusieurs éléments du pack, par exemple au moins un des 2 éléments ci-dessus et/ou pour une partie du pack de batterie et/ou pour le pack de batterie est atteinte et/ou lorsque au moins 2 éléments ont sensiblement une même température.

8. Procédé selon la revendication 7, dans lequel on calcule :
a) au moins la valeur et/ou le profil d'un courant de chauffage (I_{out_set_eff}) en fonction :
- d'une température d'un ou plusieurs élément(s) et/ou d'une température externe (T°ₑₓₜ) et/ou d'un état de la batterie, par exemple un état de charge (SoC) et/ou de santé (SoH);
- et/ou de la capacité des éléments de la batterie à accepter un courant ;
- et/ou d'une durée estimée avant que la batterie soit utilisée.
b) et/ou un courant de chauffage (I_{out_set_eff}) en fonction d'une forme d'onde du courant.

9. Procédé selon l'une des revendications 7 ou 8, le courant ayant :
- une forme continue ou étant constant;
- ou une forme d'onde périodique, par exemple sinusoïdale, ou en carré, ou en triangle, à laquelle est éventuellement superposée une composante continue, permettant par exemple de réaliser un réajustement de l'état de charge entre les cellules ou les éléments ;
ou bien:
- le courant ayant une forme continue ou étant constant et
- les tensions fournies au moins par la première cellule de stockage d'énergie et au moins par la deuxième cellule de stockage d'énergie, étant alternatives, et incluant éventuellement une composante continue.

10. Procédé selon l'une des revendications 7 à 9, le courant ayant une fréquence pour laquelle la composante réelle d'une impédance d'au moins un élément est maximale.

11. Procédé selon l'une des revendications 7 à 10:
- le courant étant constant ;
- et la tension fournie au moins par le premier élément et/ou la tension fournie au moins par le deuxième élément étant alternative(s).

12. Procédé selon l'une des revendications 7 à 11, la circulation d'un courant entre le premier élément et le deuxième élément comportant un va-et-vient de courant entre ces 2 éléments, le courant échangé entre ces 2 éléments étant en moyenne nul.

13. Procédé selon l'une des revendications 7 à 12, dans lequel :
- on effectue une répartition des éléments ou modules à réchauffer en deux groupes d'éléments G1 et G2 ;
- on fait circuler le courant du groupe G1 d'éléments au groupe G2, puis éventuellement du groupe G2 d'éléments au groupe G1, les moyens (30) de contrôle pouvant être en outre spécialement adaptés pour maximiser |U_{G1}|+|U_{G2}|, U_{G1} (resp. U_{G2}) étant la tension fournie par le groupe G1 (resp. G2).

14. Procédé selon l'une des revendications 7 à 13, dans lequel le courant est régulé par une boucle de régulation, par exemple ladite boucle de régulation du courant déterminant un nombre (NG1) de premiers éléments de stockage d'énergie et un nombre (NG2) de deuxièmes éléments de stockage d'énergie, ainsi que la tension (VG1) fournie par l'ensemble des premiers éléments de stockage d'énergie et la tension (VG2) fournie par l'ensemble des deuxièmes éléments de stockage d'énergie.

15. Procédé selon l'une des revendications 7 à 14, différents éléments ou différentes parties du pack de batterie étant chauffées à des températures différentes et/ou pour les faire converger vers une température commune, par exemple la température de l'élément ou de la partie la plus chaude et/ou le procédé étant précédé d'un refroidissement de différents éléments ou parties du pack de batterie pour les faire converger vers une température commune.
